# EUROPÄISCHE PATENTSCHRIFT

(11) **EP 0 502 934 B1**
(45) Veröffentlichungstag und Bekanntmachung des Hinweises auf die Patenterteilung: **02.11.1994**
(21) Anmeldenummer: 91900211.3
(22) Anmeldetag: 04.12.1990
(51) Int. Cl.: C09D 201/06, C09D 167/00, C09D 161/20

(54) **WÄSSRIGE DISPERSIONEN VON VERNETZTEN POLYMERMIKROTEILCHEN**
AQUEOUS DISPERSIONS OF CROSS-LINKED POLYMER MICROPARTICLES
DISPERSIONS AQUEUSES DE MICROPARTICULES POLYMERES RETICULEES

(30) Priorität: 06.12.1989 DE 3940316
(43) Veröffentlichungstag der Anmeldung: 16.09.1992
(73) Patentinhaber: BOLLIG & KEMPER KG, D-50827 Köln (DE)
(72) Erfinder: HILLE, Hans-Dieter, D-5060 Bergisch Gladbach (DE); MASSONE, Matthias, D-5000 Köln 40 (DE)
(74) Vertreter: von Kreisler, Alek, Dipl.-Chem.
(86) Internationale Anmeldenummer: EP9002096
(87) Internationale Veröffentlichungsnummer: WO9108269

(56) Entgegenhaltungen:
- EP-A- 0 193 517
- EP-A- 0 272 500
- EP-A- 0 276 655
- EP-A- 0 320 689
- GB-A- 2 218 426
- US-A- 3 133 032

## Beschreibung

Die Erfindung betrifft wäßrige Dispersionen von vernetzten Polymermikroteilchen, deren Verwendung, ein Verfahren zu deren Herstellung sowie Beschichtungszusammensetzungen diese Dispersionen enthaltend.

Die Reduzierung des Anteils an organischen Lösungsmitteln in Beschichtungszusammensetzungen wird allgemein angestrebt.

Insbesondere auf dem Gebiet der Automobillackierung, aber auch in anderen Bereichen, besteht ein großes Interesse an wäßrigen Lacksystemen.

Der Einsatz von wäßrigen Lacksystemen zieht eine Reihe von Problemen nach sich, die mit den chemischen und physikalischen Eigenschaften des Wassers zusammenhängen. So ist z.B. die Rheologie (Viskositätsverlauf während der Applikation, Pseudoplastizität, Thixotropie, Verlauf- und Ablaufeigenschaften) konventioneller Lacksysteme mit relativ einfachen Mitteln über das Abdunstverhalten der verwendeten organischen Lösungsmittel bzw. Lösungsmittelgemische gezielt zu steuern. Diese Möglichkeiten können bei wäßrigen Systemen nur in sehr eingeschränktem Umfang bzw. gar nicht genutzt werden.

Es ist aber gerade bei der Herstellung qualitativ hochwertiger Mehrschichtlackierungen, insbesondere Metalleffektlackierungen, eine Steuerung der rheologischen Eigenschaften der eingesetzten Beschichtungszusammensetzungen von äußerst großer Wichtigkeit.

So wirkt sich z.B. ein steiler Viskositätsanstieg nach der Applikation sehr günstig auf die Orientierung und Fixierung der Metallpigmentteilchen in Metalleffekt-Basislacken aus.

Problematisch ist jedoch die Verträglichkeit der Metallpigmentteilchen mit den wäßrigen Bindemittelsystemen, da es sich insbesondere bei Verwendung von Aluminiumteilchen als Metallpigment um eine amphoteres Metall handelt, welches leicht unter Wasserstoffentwicklung angegriffen wird.

Aber auch bei anderen Beschichtungsverfahren, insbesondere bei durch Spritzapplikation aufgetragenen Überzügen, hängt die Qualität der erhaltenen Beschichtungen in starkem Maße von den rheologischen Eigenschaften der verwendeten Beschichtungszusammensetzungen ab.

Es ist bekannt, daß die rheologischen Eigenschaften von wäßrigen Beschichtungszusammensetzungen durch Zugabe von vernetzten Polymermikroteilchen beeinflußt werden können.

EP-A-0 038 127 beschreibt ein Verfahren zur Herstellung einer Mehrlagenbeschichtung auf einer Untergrundoberfläche, in welcher die Base-Coat-Zusammensetzung auf einer Dispersion vernetzter Polymermikropartikel beruht, die in einem wäßrigen Medium hergestellt wurde. Die aus Polymerisaten von Alkylestern von Acryl- oder Methacrylsäuren bestehenden Polymermikropartikel wurden dabei hergestellt durch Dispersionspolymerisation in Wasser und einem weiteren organischen Lösungsmittel in Gegenwart eines bestimmten polymeren Stabilisators.

EP-A-0 320 689 beschreibt eine stabile, nicht-wäßrige Dispersion von Mikropartikeln, hergestellt aus einem Aminoplastharz und einem OH-Gruppen enthaltenden Material in einem vorzugsweise unpolaren Lösungsmittel, in Gegenwart einer organischen Sulfonsäure und eines Stabilisators.

EP-A-0 103 174 beschreibt ein Verfahren zur Herstellung von wäßrigen Dispersionen von vernetzten Polyurethan-Ionomeren durch Umsetzen von Isocyanat-Gruppen tragenen Präpolymeren mit polyfunktionellen Verbindungen. Das Verfahren ist dadurch gekennzeichnet, daß man Salzgruppen eingebaut enthaltende Polyurethan-Präpolymere mit aliphatisch und/oder cycloaliphatisch gebundenen Isocyanat-Endgruppen in einem wassermischbaren organischen Lösungsmittel mit polyfunktionellen Polyisocyanaten vermischt, die erhaltene Lösung in Wasser dispergiert und das organische Lösungsmittel abdampft.

US-A-4 408 008 und US-A-4 293 679 beschreiben ebenfalls Verfahren zur Herstellung von Polymermikroteilchen aus Polyisocycanat, jedoch findet sich in diesen Druckschriften kein Hinweis darauf, daß die dort offenbarten Dispersionen in wäßrigen Beschichtungszusammensetzungen einsetzbar sind.

Allen diesen Verfahren liegen im Prinzip zwei verschiedene Methoden zur Teilchenbildung zugrunde:
(1) Mit Hilfe von Tensiden, die oberhalb einer bestimmten Konzentration Micellen bilden, werden mit wasserunlöslichen Monomeren Teilchen erzeugt, in denen die Polymerisaton initiiert wird. Dieses Verfahren der Emulsionspolymerisation ist schon lange bekannt und wird im großtechnischen Maßstab zur Herstellung von Kunststoffdispersionen verschiedenster Art angewendet. Um vernetzte Teilchen zu erhalten, werden Monomere verwendet, die mehr als eine polymerisierbare Doppelbindung enthalten. Mit diesem Verfahren können jedoch nur Polymere hergetellt werden, deren Ketten ausschließlich aus Kohlenstoff-Kohlenstoff-Bindungen bestehen. Gezielte Modifizierungen können nur an den Seitenketten durch Auswahl der entsprechenden Monomere erfolgen. Ein weiterer Nachteil dieser Verfahren ist die Tatsache, daß zur Teilchenbildung die Verwendung von Tensiden unerläßlich ist. Die zur Micellenbildung befähigten Tenside sind wasserlösliche, niedrigmolekulare Substanzen, die außerdem meistens Elektrolyte darstellen. Da diese nicht aus den Dispersionen entfernt werden können, bringen sie oft Nachteile mit sich, wie beispielsweise bei der Wasserempfindlichkeit und im Quellvermögen.
(2) Es wird in organischer Phase ein Polymeres hergestellt, das ionische Gruppen enthält und dadurch beim Überführen in Wasser spontan Teilchen bildet, deren Größe von dem Gehalt an ionischen Gruppen abhängt. Durch Einbau bestimmter funktioneller Gruppen und Hinzufügen von entsprechenden mehrfunktionellen Reaktionspartnern werden die Teilchen in den vernetzten Zustand überführt. Es sind jedoch nur sehr wenige Reaktionen bekannt, die in wäßriger Phase unterhalb der Siedetemperatur des Wassers ablaufen, ohne das Stabilisierungssystem der Dispersion zu beeinträchtigen. Ionisch stabilisierte Dispersionen verändern ihren Stabilitätsstatus bei Zugabe von Elektrolyten, Säuren und Basen. Das bedeutet, daß sowohl Zugabe von Säuren als auch von Basen die Eigenschaften einer Dispersion stark verändert, bis hin zu vollständiger Koagulation in Abhängigkeit von der Polarität.

US-A-3 870 684 beschreibt Versuche zur Herstellung von Dispersionen vernetzter, Harnstoffgruppen-haltiger Polymermikroteilchen, bei denen in wäßriger Phase dispergierte, endständige Isocyanatgruppen aufweisende Polyurethan-Ionomere mit Polyaminen vernetzt werden. Dieses Verfahren führt jedoch nur zu instabilen, sedimentierenden Dispersionen.

In DE-A- 36 06 512 und DE-A- 36 06 513 wird ein Verfahren beschrieben, bei dem wasserlösliche Polyesterharze in wäßriger Phase mit Polyisocyanaten unter Bildung von vernetzten Teilchen umgesetzt werden. Dieses Verfahren hat den Nachteil, daß es sehr empfindlich und schwer reproduzierbar ist.

Die EP-A-0 276 655 beschreibt wässrige Dispersionen von vernetzten Polymermikroteilchen. Diese werden hergestellt auf Basis von natürlichen oder synthetischen, maleinisierten trockenen Ölen und anionischen Arylharzen. Davon konkret offenbart ist jedoch lediglich maleinisiertes Polybutadien, welches aus Polybutadienöl durch Umsetzung mit Maleinsäureanhydrid hergestellt wird. Diese Polymere, die anschließend mit dem Aminoplastharz umgesetzt werden, besitzen hohe Säurezahlen.

Aufgabe der vorliegenden Erfindung war es daher, mit einem möglichst einfach durchzuführenden Verfahren mit leicht zur Verfügung stehenden Ausgangskomponenten, stabile, vorzugsweise wäßrige Dispersionen von vernetzten Polymermikroteilchen herzustellen, deren Eigenschaften auf die verschiedensten Anwendungszwecke, insbesondere bei der Formulierung von Beschichtungszusammensetzungen, optimal abgestimmt werden können.

Überraschenderweise wurde gefunden, daß man wäßrige Dispersionen von vernetzten Polymerteilchen herstellen kann, indem man ein sowohl anionische Gruppen, bevorzugt Carboxylatgruppen, als auch Hydroxylgruppen tragendes Polymeres mit einem Aminoplastharz in einem ganz oder teilweise wassermischbaren Lösungsmittel löst, diese Lösung in Wasser überführt und bei Temperaturen zwischen 50 und 100 °C reagieren läßt und anschließend das organische Lösungsmittel abdestilliert. Dies ist überraschend, da zu erwarten war, daß die Vernetzungsreaktion ohne Katalyse einer starken Säure in einem wäßrigen System mit pH-Werten von über 7 bei Temperaturen unter 100 °C nicht ablaufen kann. Säuren würden anionisch stabilisierte Dispersionen zur Koagulation bringen.

Desweiteren wurde überraschend gefunden, daß Metallpigmentteilchen, insbesondere Aluminiumpigmentteilchen, bei der Verwendung der erfindungsgemäßen wäßrigen Dispersionen als Rheologiehilfsmittel und/oder Bindemittelkomponente nicht unter Wasserstoffentwicklung angegriffen werden.

Gemäß der Erfindung wurde die Aufgabe gelöst durch wäßrige
Dispersion von vernetzten Polymermikroteilchen, hergestellt in wäßrigem Medium aus einem gegebenenfalls in einem organischen Lösungsmittel gelösten, mindestens zwei Hydroxylgruppen tragenden Polymer, das über eine zur Bildung einer stabilen wäßrigen Dispersion ausreichende Anzahl ionischer Gruppen verfügt, aus Komponente (A) und einer weiteren Komponente (B) bei erhöhter Temperatur, dadurch gekennzeichnet, daß Komponente (A) ein Polyesterpolyol, hergestellt aus einem oder mehreren Polyolen, ausgewählt aus Ethylenglykol, 1,2- und 1,3-Propandiol, 1,3- und 1,4-Butandiol, die isomeren Pentandiole, Hexandiole oder Octandiole (z. B. 2-Ethyl-1,3-hexandiol)trimethylolpropan), Neopentylglykol, Glycerin, Bishydroxymethylcyclohexan, Erythrit, Mesoerythrit, Arabit, Adonit, Xylit, Mannit, Sorbit, Dulcit, Hexantriol oder (poly-)Pentaerythritol und einer Polycarbonsäure mit 2 bis 18 C-Atomen oder ihren Anhydriden, soweit diese Anhydride existieren, wobei die Polycarbonsäuren und/oder die Anhydride einzeln oder im Gemisch eingesetzt werden können mit einer Säurezahl von 20 bis 50 ist und Komponente (B) ein Aminoplastharz ist, das aus Molekülen besteht, die mindestens zwei reaktive Gruppen, bestehend aus Hydroxyl- und/oder Amino- und/oder Ethergruppen, enthalten, daß das Gewichtsverhältnis von Komponente (A) zu Komponente (B) zwischen 30 : 70 und 95 : 5 beträgt und daß die Dispersion in Wasser und/oder einem organischen Lösungsmittel oder Gemischen davon stabil und anwendbar ist.

Das erfindungsgemäße Verfahren wird in zwei Stufen durchgeführt. Die erste Stufe besteht in der Herstellung der Komponente (A), einem Hydroxylgruppen-haltigen Polymeren, das außerdem eine zur Bildung stabiler Dispersionen in Wasser ausreichende Menge an Säuregruppen enthält.

Die Ermittlung der für die Bildung einer stabilen Dispersion optimalen Konzentration an ionischen Gruppen in der Komponente (A) ist vom Durchschnittsfachmann mit Hilfe einfacher Routineuntersuchungen durchführbar. Die zur Bildung einer stabilen Dispersion in der Regel notwendige Konzentration an ionischen Gruppen liegt zwischen 0,1 und 3 Milliäquivalenten pro Gramm Komponente (A).

Die Neutralisierung von zur Salzbildung befähigten Gruppen mit Hilfe von Basen erfolgt vorzugsweise kurz vor der Dispergierung bzw. während der Dispergierung des aus den Komponenten (A) und (B) bestehenden Gemisches in dem wäßrigen Dispergiermedium, in welchem das organische Lösungsmittel oder Lösungsmittelgemisch der Komponente (A) enthalten ist.

Als zur Salzbildung befähigte Gruppen kommen vor allem Carbonsäure- und Sulfonsäuregruppen in Betracht. Diese Gruppen werden vorzugsweise mit einem Amin neutralisiert.

Geeignete Amine zur Neutralisation der zur Anionenbildung befähigten Gruppen sind insbesondere tertiäre Amine, wie Trimethylamin, Triethylamin, Dimethylanilin, Diethylanilin, Triphenylamin, Morpholin-Derivate und ganz besonders bevorzugt tertiäre, Hydroxylgruppen-haltige Amine wie N,N-Dimethylethanolamin.

Der Gehalt an ionischen Gruppen, der durch gezielte Neutralisation der zur Salzbildung geeigneten Gruppierungen eingestellt wird, ist ein wichtiger Parameter, über den die Größe der entstehenden vernetzten Polymermikroteilchen gesteuert werden kann.

Die Komponente (A) besteht vorzugsweise aus einem oder mehreren, mindestens zwei Hydroxylgruppen enthaltenden Polyesterpolyol (en).

Beispiele geeigneter Polyesterpolyole sind die an sich bekannten Umsetzungsprodukte von mehrwertigen Polyolen mit Polycarbonsäuren bzw. Polycarbonsäureanhydriden.

Zur Herstellung der Polyesterpolyole geeignete Polyole sind z.B. Ethylenglykol, 1,2- und 1,3-Propandiol, 1,3- und 1,4-Butandiol, die isomeren Pentandiole, Hexandiole oder Octandiole (z.B. 2-Ethyl-1,3-hexandiol)trimethylolpropan), Neopentylglykol, Glycerin, Bishydroxymethylcyclohexan, Erythrit, Mesoerythrit, Arabit, Adonit, Xylit, Mannit, Sorbit, Dulcit, Hexantriol oder (poly-)Pentaerythritol.

Die zur Herstellung der Polyesterpolyole geeigneten Polycarbonsäuren bestehen in erster Linie aus niedermolekularen Polycarbonsäuren oder ihren Anyhdriden, soweit diese Anhydride existieren, mit 2 bis 18 C-Atomen im Molekül. Di- und Tricarbonsäuren werden bevorzugt eingesetzt. Die Polycarbonsäuren und/oder die Anhydride können einzeln oder im Gemisch eingesetzt werden.

Geeignete Carbonsäuren sind beispielsweise Oxalsäure, Bernsteinsäure, Fumarsäure, Phthalsäure, Isophthalsäure, Terephthtalsäure, Tetrahydrophthalsäure, Hexahydrophthtalsäure, Adipinsäure, Acelainsäure, Sebacinsäure, Maleinsäure, Glutarsäure, Hexachlorheptandicarbonsäure, Tetrachlorphthalsäure und Trimellithsäure. Geeignet sind auch verschiedene Fettsäuren, wie z.B. Sojafettsäure, Isononansäure etc. Anstelle dieser Säuren können auch deren Anhydride, soweit diese existieren, eingesetzt werden. Es können auch Polyesterpolyole als Komponente (A) eingesetzt werden, die durch Polymerisation von Lactonen hergestellt worden sind.

Wegen der Handhabbarkeit ist es in den meisten Fällen notwendig, die Komponente (A) (Prepolymer) in einem organischen Lösungsmittel oder einem Lösungsmittelgemisch zu lösen. Als Lösungsmittel sind insbesondere solche auszuwählen, die so flüchtig sind, daß sie aus der wäßrigen Dispersion durch Destillation wieder entfernt werden können. Besonders geeignet sind hierbei Aceton, Methylethylketon, Methylisobutylketon, Methylamylketon, Dimethoxyethan, Tetrahydrofuran, Dioxan oder Gemische daraus. Größere Mengen an Hydroxylgruppen-haltigen Lösungsmiteln können sich nachteilig auswirken. Als Komponente (A) können auch Mischungen mit nur OH-Gruppen tragenden Polymeren verwendet werden. Das Verhältnis kann vom Durchschnittsfachmann leicht ermittelt werden.

Als Komponente (B) können im Prinzip alle Aminoplastharze verwendet werden, die in Kombination mit Hydroxylgruppen tragenden Harzen (Komponenten (A)) zur Herstellung von Einbrennlacken geeignet sind. Neben den vorzugsweise verwendeten wasserunlöslichen Typen können auch wasserlösliche Typen eingesetzt werden. Neben anderen Aminoplasten haben sich insbesondere Melaminharze und modifizierte Melaminharze bewährt, die mindestens zwei reaktive Gruppen pro Molekül besitzen. Unter diesen reaktiven Gruppen sind insbesondere Hydroxylgruppen und/oder Aminogruppen und/oder Ethergruppen (Melamin-Methylol-Verbindungen) zu verstehen.

Das Verfahren zur Herstellung der vernetzten Polymermikroteilchen wird so durchgeführt, daß zunächst die Komponente (A) in einem organischen Lösungsmittel mit der Komponente (B) gemischt wird. Das Mischungsverhältnis von Komponente (A) zu Komponente (B) kann zwischen 30 : 70 und 95 : 5, vorzugsweise zwischen 60 : 40 und 80 : 20 betragen und richtet sich insbesondere nach dem Verwendungszweck der Dispersion. Diese Mischung wird in die wäßrige Phase überführt, indem als erstes durch Neutralisation mit einer wasserlöslichen Base die Säuregruppen in Anionen umgewandelt werden. Dabei sinkt die Teilchengröße mit zunehmendem Neutralisationsgrad. Es ist jedoch nicht sinnvoll, einen Neutralisationsgrad von 100 % zu überschreiten, da die Vernetzungsreaktion bei höheren pH-Werten verlangsamt wird. Andererseits ist jedoch zu berücksichtigen, daß die Stabilität der Dispersion beeinträchtigt werden kann, wenn mit zu niedrigem Neutralisationsgrad gearbeitet wird. Dem Fachmann ist es jedoch leicht möglich, durch Vorversuche den geeigneten Neutralisationsgrad-Bereich eines Systems zu bestimmen. Oft ist es von Vorteil, das Neutralisationsmittel als wäßrige Lösung zuzugeben.

Der Festkörpergehalt während der Vernetzungsreaktion ist so zu wählen, daß die Viskosität die Rührbarkeit nicht beeinträchtigt. Mit fortschreitender Vernetzung nimmt die Viskosität jedoch ab, so daß zu Beginn der Reaktion an die untere Grenze der Rührbarkeit gegangen werden kann. Das Fortschreiten der Reaktion kann durch die Entwicklung der Viskosität, gemessen in vorwiegend organischem Medium, verfolgt werden. Am Anfang steigt die Viskosität mit zunehmendem Molekulargewicht bis zu einem Maximum, um dann mit zunehmendem Gehalt an vernetzten Teilchen wieder abzufallen. Ab diesem Zeitpunkt ist eine Trübung im organischen Medium feststellbar. Die Reaktion ist folglich abgeschlossen, wenn die Viskosität in vorwiegend organischer Phase nicht mehr fällt, und die Trübung nicht mehr stärker wird. Dennoch kann die Reaktion an jeder Stelle durch Abkühlen vorzeitig abgebrochen werden. Die Reaktionstemperatur, bei der die Vernetzungsreaktionen durchgeführt werden können, beträgt zwischen 50 und 100 °C, vorzugsweise zwischen 70 und 90 °C. Es ist jedoch auch jederzeit möglich, die Reaktion auch bei höheren Temperaturen und unter Druck durchzuführen. Nach Beendigung der Reaktion wird die erhaltene Dispersion mit dem Amin oder einer wäßrigen Lösung des Amins zu 100 % neutralisiert und das noch vorhandene organische Lösungsmittel oder Lösungsmittelgemisch abdestilliert. Hierzu kann gegebenenfalls das Anlegen eines Vakuums erforderlich sein.

Die so erhaltenen wäßrigen Dispersionen zeichnen sich durch eine hohe Stabilität und einen Festkörpergehalt von 10 bis 50 Gew.-%, vorzugsweise 30 bis 40 Gew.-% aus.

Die so erhaltenen Polymerteilchen können auch, z.B. gemäß EP-A-29 637, in nicht-wäßrige Dispersionen überführt werden.

Zur Überführung der vernetzten Polymermikroteilchen in organische Phase wird die erhaltene Dispersion mit einem Alkohol (z.B. Butanol), einem organischen Lösungsmittel (z.B. Xylol) sowie gegebenenfalls Wasser vermischt. Durch Zugabe einer geeigneten Säure (z.B. Maleinsäure) oder deren wäßrigen Lösung erfolgt eine Rückprotonierung der Säuregruppen, was zur Zerstörung des stabilisierenden Systems und damit zur Koagulation führt. Nach Abtrennung der wäßrigen Phase und Entfernung von Wasserresten aus der organischen Phase durch Vakuumdestillation erhält man eine bei Raumtemperatur hochviskose, nichtwäßrige und stabile Dispersion von vernetzten Polymermikroteilchen in einem organischen Lösungsmittel.

Die Erfindung betrifft weiterhin die Verwendung der Dispersionen, insbesondere der wäßrigen Dispersionen als Rheologiemittel und Bindemittelkomponente in Lacken, vorzugsweise in Metalleffektlacken.

Hier wurde überraschenderweise festgestellt, daß bei Verwendung der erfindungsgemäßen Dispersionen die Gefahr der Wasserstoffbildung und des sich-Auflösens der Metallpigmentteilchen nicht gegeben ist. Dies betrifft insbesondere amphotere Metalle, wie beispielsweise Aluminium oder Aluminium-Legierungen (z.B. Aluminiumbronze), welche den Lacken als Metallpigment zur Erzielung eines Metalleffektes zugesetzt werden können. Bei Verwendung der erfindungsgemäßen Dispersionen unterbleibt jegliche Wasserstoffentwicklung in den Lacken, obwohl der pH-Wert der Dispersionen (pH ≧ 8) dazu geeignet wäre, die Aluminiumpigmentteilchen unter Wasserstoffentwicklung anzugreifen.

Die Erfindung betrifft ferner Beschichtungszusammensetzungen, bestehend aus einer Dispersion von vernetzten Polymermikroteilchen, hergestellt in Wasser aus einem gegebenenfalls in einem organischen Lösungsmittel gelösten, mindestens zwei Hydroxylgruppen tragenden Polymer, das über eine zur Bildung einer stabilen wäßrigen Dispersion ausreichende Anzahl ionischer Gruppen verfügt, als Komponente (A) und einer weiteren Komponente (B) bei erhöhter Temperatur, in einem Medium, das noch weiteres filmbildendes Material, Pigmente und weitere übliche Additive enthalten kann und sich insbesondere zur Herstellung von schützenden und/oder dekorativen Überzügen eignet, welche dadurch gekennzeichnet ist, daß Komponente (A) ein Polyesterpolyol, Polyurethan oder Polyacrylat mit einer Säurezahl von 10 bis 100 ist und Komponente (B) ein Aminoplastharz ist, das aus Molekülen besteht, die mindestens zwei reaktive Gruppen besitzen. Bei diesen reaktiven Gruppen handelt es sich um Hydroxyl- und/oder Amino- und/oder Ethergruppen. In der Dispersion beträgt das Gewichtsverhältnis von Komponente (A) zu Komponente (B) zwischen 30 : 70 und 95 : 5. Die Dispersion selbst ist in Wasser und/oder einem organischen Lösungsmittel oder Gemischen davon stabil und anwendbar.

Die oben beschriebenen Beschichtungszusammensetzungen werden bevorzugt in Verfahren zur Herstellung von mehrschichtigen Überzügen auf Substratoberflächen verwendet, bei welchen
(1) als Basis-Beschichtungszusammensetzung eine wäßrige Dispersion aufgebracht wird,
(2) aus der in Stufe (1) aufgebrachten Zusammensetzung ein Polymerfilm auf der Substratoberfläche gebildet wird,
(3) auf der so erhaltenen Basisschicht eine geeignete transparente Deckschicht-Zusammensetzung aufgebracht wird und anschließend
(4) die Basisschicht zusammen mit der Deckschicht eingebrannt wird.

Als Deckschicht-Zusammensetzungen sind grundsätzlich alle bekannten nicht oder nur transparent pigmentierten Überzugsmittel geeignet. Hierbei kann es sich um konventionelle lösungsmittelhaltige Klarlacke, wasserverdünnbare Klarlacke oder Pulverklarlacke handeln.

Als zu beschichtende Substrate kommen vor allem vorbehandelte Metallsubstrate in Frage; es können aber auch nicht vorbehandelte Metalle und beliebige andere Substrate, wie z.B. Holz oder Kunststoffe, unter Verwendung der erfindungsgemäßen Basis-Beschichtungszusammensetzungen mit einer mehrschichigen schützenden und/oder dekorativen Beschichtung überzogen werden.

In den nachfolgenden Beispielen wird die Erfindung näher erläutert, ohne darauf beschränkt zu sein.

### Beispiele

Die Mengenangaben in den nachfolgenden Beispielen sind Gewichtsangaben. Die Messung der Viskosität erfolgte bei 20 °C in einem DIN-Becher (4 mm). Bei dem verwendeten Wasser handelte es sich um vollentsalztes Wasser.

### I. Herstellung von Polyesterpolyolen (Komponente (A))

### Beispiel 1

In einem Vierhalskolben, der mit einem Rührer, einem Thermometer und Füllkörperkolonne ausgerüstet ist, werden 1911,6 Teile 1,6-Hexandiol zusammen mit 525,6 Teilen Adipinsäure zum Schmelzen gebracht. Anschließend werden unter Rühren 896,4 Teile Isophthalsäure zugegeben und die Temperatur so gesteigert, daß die Kolonnenkopftemperatur 100 °C nicht überschreitet. Bei einer maximalen Temperatur des Reaktionsgemisches von 220 °C wird so lange weiterverestert, bis eine Säurezahl von 3 erreicht ist. Nach Abkühlen auf 170 °C werden 691,2 Teile Trimellithsäureanhydrid zugegeben und bei 170 °C weiterverestert, bis eine Säurezahl von 28 erreicht ist. Nach Abkühlen auf 100 °C werden 1200 Teile Methylisobutylketon zugegeben. Die erhaltene Polyesterharzlösung besitzt einen Festkörpergehalt von 75 %.

### Beispiel 2

In einer Apparatur gemäß Beispiel 1 werden 670 Teile Trimethylolpropan, 354 Teile 1,6-Hexandiol, 1400 Teile einer isomerisierten Sojafettsäure und 592 Teile Phthalsäureanhydrid zum Schmelzen gebracht. Anschließend wird unter Rühren die Temperatur so gesteigert, daß die Kolonnenkopftemperatur 100 °C nicht überschreitet. Bei einer maximalen Temperatur des Reaktionsgemisches von 220 °C wird so lange weiterverestert, bis eine Säurezahl von 3 erreicht ist. Nach dem Abkühlen auf 170 °C werden 384 Teile Trimellithsäureanhydrid zugegeben und bei 170 °C weiterverestert, bis eine Säurezahl von 34 erreicht ist. Nach dem Abkühlen auf 110 °C werden 1076 Teile Methylisobutylketon zugegeben. Festkörpergehalt: 77 %.

### Beispiel 3

In einer Apparatur gemäß Beispiel 1 werden 643,2 Teile Trimethylolpropan, 472 Teile 1,6-Hexandiol, 758,4 Teile Isononansäure und 592 Teile Phthalsäureanhydrid zum Schmelzen gebracht. Anschließend wird unter Rühren die Temperatur so gesteigert, daß die Kolonnenkopftemperatur 100 °C nicht überschreitet. Bei einer maximalen Temperature des Reaktionsgemisches von 220 °C wird so lange weiterverestert, bis eine Säurezahl von 3 erreicht ist. Nach dem Abkühlen auf 170 °C werden 460,8 Teile Trimellithsäureanhydrid zugegeben und bei 170 °C weiterverestert, bis eine Säurezahl von 33 erreicht ist. Nach dem Abkühlen auf 100 °C werden 903,5 Teile Methylisobutylketon zugegeben. Festkörpergehalt: 73,8 %.

### Beispiel 4

In einer Apparatur gemäß Beispiel 1 werden 1664 Teile Neopentylglykol zum Schmelzen gebracht. Anschließend werden unter Rühren 1328 Teile Isophthalsäure zugegeben und die Temperatur so gesteigert, daß die Kolonnenkopftemperatur 100 °C nicht überschreitet. Bei einer maximalen Temperatur des Reaktionsgemisches von 220 °C wird so lange weiterverestert, bis eine Säurezahl von 3 erreicht ist. Nach Abkühlen auf 170 °C werden 768 Teile Trimellithsäureanhydrid zugegeben und bei 170 °C weiterverestert, bis eine Säurezahl von 33 erreicht ist. Nach Abkühlen auf 100 °C werden 1442 Teile Methylisobutylketon zugegeben. Festkörpergehalt: 70 %.

### Beispiel 5

In einer Apparatur gemäß Beispiel 1 werden 1699,2 Teile 1,6-Hexandiol zum Schmelzen gebracht. Anschließend werden unter Rühren 1195,2 Teile Isophthalsäure zugegeben und die Temperatur so gesteigert, daß die Kolonnenkopftemperatur 100 °C nicht überschreitet. Bei einer maximalen Temperatur des Reaktionsgemisches von 220 °C wird so lange weiterverestert, bis eine Säurezahl von 3 erreicht ist. Nach Abkühlen auf 170 °C werden 345,6 Teile Trimellithsäureanhydrid und 684 Teile Admerginsäure (Addukt von Maleinsäureanhydrid an konjugiert-ungesättigte Fettsäuren) zugegeben und bei 215 °C weiterverestert, bis eine Säurezahl von 27 erreicht ist. Nach Abkühlen auf 100 °C werden 1529,5 Teile Methylisobutylketon zugegeben. Festkörpergehalt: 70 %.

### II. Herstellung von vernetzten Polymermikroteilchen

### Beispiel 6

In einem heizbaren Rührgefäß, das mit einem Thermometer, einem Rückflußkühler, bzw. einer Destillationsbrücke, ausgerüstet ist, werden 1050 Teile der Polyesterharzlösung von Beispiel 1 zusammen mit 482 Teilen Setamine US 132 (Melaminharz in Butanol) eingewogen und auf 40 °C aufgeheizt. Unter Rühren und weiterem Aufheizen werden 567,8 Teile einer 5 %igen wäßrigen Lösung von N,N-Dimethylaminoethanol (entspricht einer 80 %igen Neutralisation der Säuregruppen) innerhalb 10 min zugegeben. Nach Ende der Zugabe beträgt die Temperatur 35 °C. Jetzt werden, ebenfalls unter weiterem Aufheizen, 1521,6 Teile vollentsalzten Wassers innerhalb 15 min zugegeben. Bei Ende der Zugabe beträgt die Temperatur 55 °C. Es wird weiter geheizt auf 85 °C, jedoch wird vorher eine Probe entnommen zur Bestimmung des Viskosität und des pH-Wertes. Der pH-Wert beträgt 7,78. Zur Bestimmung der Viskosität wird die Probe zunächst mit N,N-Dimethylaminoethanol auf einen Neutralisationsgrad von 100 % gebracht, und mit Butylglykol 1 : 1 verdünnt. Die Viskosität der klaren Lösung beträgt 14 sec. Nach 30 min sind die 85 °C erreicht, und es wird erneut eine Probe entnommen. Die Viskosität der immer noch klaren Lösung ist auf 27 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 19 sec. Die Temperatur von 85 °C wird noch weiter gehalten bis die Viskosität der neutralisierten Lösung in Butylglykol nicht mehr niedriger wird. Nach 3 h sind 14 sec erreicht. Jetzt wird die erhaltene Dispersion mit N,N-Dimethylaminoethanol zu 100 % neutralisiert und im Vakuum das Methylisobutylketon abdestilliert. Man erhält eine stabile Dispersion mit einem Festkörpergehalt von 35 %, einem pH-Wert von 8,15 und einer Viskosität von 21 sec.

### Beispiel 7

In einem Rührgefäß gemäß Beispiel 6 werden 1050 Teile der Polyesterharzlösung von Beispiel 1 zusammen mit 421,8 Teilen Cymel 1158 (butyliertes, NH-Gruppen enthaltendes Harz in Butanol) eingewogen und auf 40 °C aufgeheizt. Unter Rühren und weiterem Aufheizen wurden 567,8 Teile einer 5 %igen, wäßrigen Lösung von N,N-Dimethylaminoethanol (entspricht einer 80 %igen Neutralisation der Säuregruppen) innerhalb 10 min zugegeben. Nach Ende der Zugabe beträgt die Temperatur 35 °C. Jetzt werden, ebenfalls unter weiterem Aufheizen, 1521,6 Teile vollentsalzten Wassers innerhalb 15 min zugegeben. Bei Ende der Zugabe beträgt die Temperatur 54 °C. Es wird weiter geheizt auf 85 °C, jedoch wird vorher eine Probe entnommen zur Bestimmung der Viskosität und des pH-Wertes. Der pH-Wert beträgt 7,78. Zur Bestimmung der Viskosität wird die Probe zunächst mit N,N-Dimethylaminoethanol auf einen Neutralisationsgrad von 100 % gebracht, und mit Butylglykol 1 : 1 verdünnt. Die Viskosität der klaren Lösung beträgt 14 sec. Nach 30 min sind die 85 °C erreicht, und es wird erneut eine Probe entnommen. Die Viskosität der immer noch klaren Lösung ist auf 28 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 20 sec. Die Temperatur von 85 °C wird noch weiter gehalten bis die Viskosität der neutralisierten Lösung in Butylglykol nicht mehr niedriger wird. Nach 3 h sind 15 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 35 %, einem pH-Wert von 8,48 und einer Viskosität von 20 sec.

### Beispiel 8

In einem Rührgefäß gemäß Beispiel 6 wurden 1050 Teile der Polyesterharzlösung von Beispiel 1 zusammen mit 613,6 Teilen Maprenal MF 650 (nicht plastifiziertes, isobutylverethertes Melamin-Formaldehyd-Harz in Isobutanol) eingewogen und auf 40 °C aufgeheizt. Unter Rühren und weiterem Aufheizen werden 567,8 Teile einer 5 %igen, wäßrigen Lösung von N,N-Dimethylaminoethanol (entspricht einer 80 %igen Neutralisiation der Säuregruppen) innerhalb 10 min zugegeben. Nach Ende der Zugabe beträgt die Temperatur 35 °C. Jetzt werden, ebenfalls unter weiterem Aufheizen, 1521,6 Teile vollentsalzten Wassers innerhalb 15 min zugegeben. Bei Ende der Zugabe beträgt die Temperatur 55 °C. Es wird weiter geheizt auf 85 °C, jedoch wird vorher eine Probe entnommen zur Bestimmung der Viskosität und des pH-Wertes. Der pH-Wert beträgt 7,87. Zur Bestimmung der Viskosität wird die Probe zunächst mit N,N-Dimethylaminoethanol auf einen Neutralisationsgrad von 100 % gebracht, und mit Butylglykol 1 : 1 verdünnt. Die Viskosität der klaren Lösung beträgt 13 sec. Nach 30 min sind die 85 °C erreicht, und es wird erneut eine Probe entnommen. Die Viskosität der immer noch klaren Lösung ist auf 27 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 21 sec. Die Temperatur von 85 °C wird noch weiter gehalten bis die Viskosität der neutralisierten Lösung in Butylglykol nicht mehr niedriger wird. Nach 3 h sind 16 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 33 %, einem pH-Wert von 8,19 und einer Viskosität von 21 sec.

### Beispiel 9

In einem Rührgefäß gemäß Beispiel 6 werden 1050 Teile der Polyesterharzlösung von Beispiel 2 zusammen mit 495 Teilen Setamine US132 (Melaminharz in Butanol) eingewogen und auf 40 °C aufgeheizt. Unter Rühren und weiterem Aufheizen werden 687,5 Teile einer 5 %igen wäßrigen Lösung von N,N-Dimethylaminoethanol (entspricht einer 80 %igen Neutralisation der Säuregruppen) innerhalb 10 min zugegeben. Nach Ende der Zugabe beträgt die Temperatur 48 °C. Jetzt werden, ebenfalls unter weiterem Aufheizen, 1457,5 Teile vollentsalzten Wassers innerhalb 15 min zugegeben. Bei Ende der Zugabe beträgt die Temperatur 68 °C. Es wird weiter geheizt auf 85 °C, jedoch wird vorher eine Probe entnommen zur Bestimmung der Viskosität und des pH-Wertes. Der pH-Wert beträgt 7,78. Zur Bestimmung der Viskosität wird die Probe zunächst mit N,N-Dimethylaminoethanol auf einen Neutralisationsgrad von 100 % gebracht und mit Butylglykol 1 : 1 verdünnt. Die Viskosität der klaren Lösung beträgt 13 sec. Nach 30 min sind die 85 °C erreicht, und es wird erneut eine Probe entnommen. Die Viskosität der bereits leicht trüben Lösung ist auf 16 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 15 sec. Die Temperatur von 85 °C wird noch weiter gehalten bis die Viskosität der neutralisierten Lösung in Butylglykol nicht mehr niedriger wird. Nach 3 h sind 14 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 34 %, einem pH-Wert von 8,37 und einer Viskosität von 21 sec.

### Beispiel 10

In einem Rührgefäß gemäß Beispiel 6, das mit einem Thermometer, einem Rückflußkühler bzw. einer Destillationsbrücke ausgerüstet ist, werden 1070 Teile der Harzlösung von Beispiel 1 zusammen mit 483,5 Teilen Setamine US132 (Melaminharz in Butanol) eingewogen und auf 40 °C aufgeheizt. Unter Rühren und weiterem Aufheizen werden 653,4 Teile einer 5 %igen, wäßrigen Lösung von N,N-Dimethylaminoethanol (entspricht einer 80 %igen Neutralisation der Säuregruppen) innerhalb 10 min zugegeben. Nach Ende der Zugabe beträgt die Temperatur 40 °C. Jetzt werden, ebenfalls unter weiterem Aufheizen, 1441,6 Teile vollentsalzten Wassers innerhalb 15 min zugegeben. Bei Ende der Zugabe beträgt die Temperatur 44 °C. Es wird weiter geheizt auf 85 °C, jedoch wird vorher eine Probe entnommen zur Bestimmung der Viskosität und des pH-Wertes. Der pH-Wert beträgt 7,68. Zur Bestimmung der Viskosität wird die Probe zunächst mit N,N-Dimethylaminoethanol auf einen Neutralisationsgrad von 100 % gebracht und mit Butylglykol 1 : 1 verdünnt. Die Viskosität der klaren Lösung beträgt 13 sec. Nach 30 min sind die 85°C erreicht, und es wird erneut eine Probe entnommen. Die Viskosität der immer noch klaren Lösung ist auf 55 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 35 sec. Die Temperatur von 85 °C wird noch weiter gehalten bis die Viskosität der neutralisierten Lösung in Butylglykol nicht mehr niedriger wird. Nach 3 h sind 17 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 35 %, einem pH-Wert von 8,45 und einer Viskosität von 48 sec.

### Beispiel 11

In einem Rührgefäß gemäß Beispiel 6 werden 1100 Teile der Polyesterharzlösung von Beispiel 4 zusammen mit 597 Teilen Setamine US132 (Melaminharz in Butanol) eingewogen und auf 40 °C aufgeheizt. Unter Rühren und weiterem Aufheizen werden 626 Teile einer 5 %igen, wäßrigen Lösung von N,N-Dimethylaminoethanol (entspricht einer 75 %igen Neutralisation der Säuregruppe) innerhalb 10 min zugegeben. Nach Ende der Zugabe beträgt die Temperatur 35 °C. Jetzt werden, ebenfalls unter weiterem Aufheizen, 1590 Teile vollentsalzten Wassers innerhalb 15 min zugegeben. Bei Ende der Zugabe beträgt die Temperatur 55 °C. Es wird weiter geheizt auf 85 °C, jedoch wird vorher eine Probe entnommen zur Bestimmung der Viskosität und des pH-Wertes. Der pH-Wert beträgt 7,74. Zur Bestimmung der Viskosität wird die Probe zunächst mit N,N-Dimethylaminoethanol auf einen Neutralisationsgrad von 100 % gebracht, und mit Butylglykol 1 : 1 verdünnt. Die Viskosität der klaren Lösung beträgt 14 sec. Nach 30 min sind die 85 °C erreicht, und es wird erneut eine Probe entnommen. Die Viskosität der immer noch klaren Lösung ist auf 27 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 18 sec. Die Temperatur von 85 °C wird noch weiter gehalten bis die Viskosität der neutralsieirten Lösung in Butylglykol nicht mehr niedriger wird. Nach 3 h sind 14 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 32 %, einem pH-Wert von 8,15 und einer Viskosität von 19 sec.

### Beispiel 12

In einem Rührgefäß gemäß Beispiel 6 werden 950 Teile der Polyesterharzlösung von Beispiel 2 zusammen mit 635,5 Teilen Cymel 1158 (butyliertes, NH-Gruppen enthaltendes Harz in Butanol) eingewogen und auf 40 °C aufgeheizt. Unter Rühren und weiterem Aufheizen werden 672.8 Teile einer 5 %igen, wäßrigen Lösung von N,N-Dimethylaminoethanol (entspricht einer 80 %igen Neutralisation der Säuregruppen) innerhalb 10 min zugegeben. Nach Ende der Zugabe beträgt die Temperatur 48 °C. Jetzt werden, ebenfalls unter weiterem Aufheizen, 1689,9 Teile vollentsalzten Wassers innerhalb 15 min zugegeben. Bei Ende der Zugabe beträgt die Temperatur 68 °C. Es wird weiter geheizt auf 85 °C, jedoch wird vorher eine Probe entnommen zur Bestimmung der Viskosität und des pH-Wertes. Der pH-Wert beträgt 7,52. Zur Bestimmung der Viskosität wird die Probe zunächst mit N,N-Dimethylaminoethanol auf einen Neutralisationsgrad von 100 % gebracht und mit Butylglykol 1 : 1 verdünnt. Die Viskosität der klaren Lösung beträgt 13 sec. Nach 30 min sind die 85 °C erreicht, und es wird erneut eine Probe entnommen. Die Viskosität der bereits leicht trüben Lösung ist auf 14 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 15 sec. Die Temperatur von 85 °C wird noch weiter gehalten bis die Viskosität der neutralisierten Lösung in Butylglykol nicht mehr niedriger wird. Nach 3 h sind 13 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 31 %, einem pH-Wert von 8,52 und einer Viskosität von 21 sec.

### Beispiel 13

In einem Rührgefäß gemäß Beispiel 6 werden 1100 Teile der Polyesterharzlösung von Beispiel 1 zusammen mit 392,9 Teilen Cymel 327 (hochmethyliertes Melamin-Formaldehyd-Harz in Isobutanol) eingewogen und auf 40 °C aufgeheizt. Unter Rühren und weiterem Aufheizen werden 446 Teile einer 5 %igen, wäßrigen Lösung von N,N-Dimethylaminoethanol (entspricht einer 60 %igen Neutralisation der Säuregruppen) innerhalb 10 min zugegeben. Nach Ende der Zugabe beträgt die Temperatur 40 °C. Jetzt werden, ebenfalls unter weiterem Aufheizen, 1742,8 Teile vollentsalzten Wassers innerhalb 15 min zugegeben. Bei Ende der Zugabe beträgt die Temperatur 45 °C. Es wird weiter geheizt auf 85 °C, jedoch wird vorher eine Probe entnommen zur Bestimmung der Viskosität und des pH-Wertes. Der pH-Wert beträgt 7,10. Zur Bestimmung der Viskosität wird die Probe zunächst mit N,N-Dimethylaminoethanol auf einen Neutralisationsgrad von 100 % gebracht, und mit Butylglykol 1 : 1 verdünnt. Die Viskosität der klaren Lösung beträgt 13 sec. Nach 30 min sind die 85 °C erreicht, und es wird erneut eine Probe entnommen. Die Viskosität der schwach trüben Lösung ist auf 18 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 14 sec. Die Temperatur von 85 °C wird noch weiter gehalten bis die Viskosität der neutralisierten Lösung in Butylglykol nicht mehr niedriger wird. Nach 3 h sind 13 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 36 %, einem pH-Wert von 8,65 und einer Viskosität von 12 sec.

### Beispiel 14

In einem Rührgefäß gemäß Beispiel 6 werden 1200 Teile der Polyesterharzlösung von Beispiel 5 zusammen mit 404 Teilen Cymel 327 (hochmethyliertes Melamin-Formaldehyd-Harz in Isobutanol) eingewogen und auf 40 °C aufgeheizt. Unter Rühren und weiterem Aufheizen werden 486,2 Teile einer 5 %igen, wäßrigen Lösung von N,N-Dimethylaminoethanol (entspricht einer 80 %igen Neutralisation der Säuregruppen) innerhalb 10 min zugegeben. Nach Ende der Zugabe beträgt die Temperatur 35 °C. Jetzt werden, ebenfalls unter weiterem Aufheizen, 1764,7 Teile vollentsalzten Wassers innerhalb 15 min zugegeben. Bei Ende der Zugabe begrägt die Temperatur 55 °C. Es wird weiter geheizt auf 85 °C, jedoch wird vorher eine Probe entnommen zur Bestimmung der Viskosität und des pH-Wertes. Der pH-Wert beträgt 7,98. Zur Bestimmung der Viskosität wird die Probe zunächst mit N,N-Dimethylaminoethanol auf einen Neutralisationsgrad von 100 % gebracht und mit Butylglykol 1 : 1 verdünnt. Die Viskosität der klaren Lösung beträgt 13 sec. Nach 30 min sind die 85 °C erreicht, und es wird erneut eine Probe entnommen. Die Viskosität der immer noch klaren Lösung ist auf 15 sec gestiegen. Nach weiteren 30 min bei 85 °C wird erneut eine Probe gezogen. Beim Verdünnen der Probe mit Butylglykol (100 % neutralisiert) erhält man eine trübe Lösung mit einer Viskosität von 20 sec. Die Temperatur von 85 °C wird noch weiter gehalten bis die Viskosität der neutralisierten Lösung in Butylglykol nicht mehr niedriger wird. Nach 3 h sind 15 sec erreicht. Jetzt wird die erhaltene Dispersion mit N,N-Dimethylaminoethanol 100 %ig neutralisiert und im Vakuum das Methylisobutylketon abdestilliert. Man erhält eine stabile Dispersion mit einem Festkörpergehalt von 35 %, einem pH-Wert von 8,85 und einer Viskosität von 21 sec.

### III. Anwendungsbeispiele

### Beispiel 15

### Überführung der Polymermikroteilchen in organische Phase

In einem heizbaren Rührgefäß, das mit einem Thermometer, einem Rückflußkühler bzw. einer Destillationsbrücke und einem Bodenablaßventil ausgerüstet ist, werden 2615 Teile der Dispersion von Beispiel 11 zusammen mit 800 Teilen vollentsalztem Wasser vorgelegt. Dazu werden 990 Teile Xylol und 810 Teile n-Butanol gegeben und unter Rühren vermischt. Zu der Mischung werden unter Rühren 29 Teile Maleinsäure, gelöst in 56 Teilen Wasser, gegeben. Nach 20 min intensiver Durchmischung wird der Rührer abgestellt und gewartet, bis die Phasentrennung abgeschlossen ist. Nach 45 min wird die untere Phase, die vorwiegend aus Wasser besteht, abgelassen (2650 ml). Nach Aufheizen auf 60 °C wird das restliche Wasser im Vakuum abdestilliert. Man erhält eine bei Raumtemperatur hochviskose, nichtwäßrige, stabile Dispersion von vernetzten Polymermikroteilchen mit einem Festkörpergehalt von 40 %.

### Beispiel 16

### Beschichtungszusammensetzung

56 Gew.-Teile der in Beispiel 9 beschriebenen Dispersion werden unter Rühren mit 23 Gew.-Teilen Verdickerdispersion versetzt. Als Verdicker wird Latekoll D (Verdicker auf Acrylester-Methacrylsäure-Basis mit 25 %igem Festkörpergehalt) verwendet, das mit Wasser auf einen Festkörpergehalt von 3 % verdünnt, und mit Dimethylethanolamin auf einen pH-Wert von 7,0 eingestellt worden ist.

In einem getrennten Gefäß werden 4,5 Gew.-Teile einer handelsüblichen non-leafing Aluminiumbronze mit einem Aluminiumanteil von 65 % mit 5 Gew.-Teilen Butylglykol angeteigt und in üblicher Weise aufgeschlossen.

Diese Aluminiumschlämme wird zu der oben beschriebenen Dispersion unter Rühren zugegeben. Nach Einstellen des pH-Wertes auf 8,0 mit einer wäßrigen 10 %igen Dimethylethanolaminlösung (ca. 0,6 Gew.-Teile) wird mit Wasser (ca. 10 Gew.-Teile) auf eine Viskosität von 40 sec eingestellt. Der Festkörpergehalt beträgt 23 %.

Der so erhaltene Basislack wird auf ein mit Füller in üblicher Weise beschichtetes Stahlblech gespritzt und 5 Minuten bei 50 °C getrocknet. Dann wird mit einem handelsüblichen Einbrennlack auf Basis Polyacrylat/Melaminharz überspritzt und 30 Minuten bei 130 °C eingebrannt. Die so erhaltene Beschichtung zeigt eine hohe Brillanz und einen gleichmäßigen, ausgeprägten Metalliceffekt.

## Patentansprüche

1. Wäßrige Dispersion von vernetzten Polymermikroteilchen, hergestellt in wäßrigem Medium aus einem gegebenenfalls in einem organischen Lösungsmittel gelösten, mindestens zwei Hydroxylgruppen tragenden Polymer, das über eine zur Bildung einer stabilen wäßrigen Dispersion ausreichende Anzahl ionischer Gruppen verfügt, aus Komponente (A) und einer weiteren Komponente (B) bei erhöhter Temperatur, dadurch gekennzeichnet, daß Komponente (A) ein Polyesterpolyol, hergestellt aus einem oder mehreren Polyolen, ausgewählt aus Ethylenglykol, 1,2- und 1,3-Propandiol, 1,3- und 1,4-Butandiol, die isomeren Pentandiole, Hexandiole oder Octandiole (z. B. 2-Ethyl-1,3-hexandiol)trimethylolpropan), Neopentylglykol, Glycerin, Bishydroxymethylcyclohexan, Erythrit, Mesoerythrit, Arabit, Adonit, Xylit, Mannit, Sorbit, Dulcit, Hexantriol oder (poly-)Pentaerythritol und einer Polycarbonsäure mit 2 bis 18 C-Atomen oder ihren Anhydriden, soweit diese Anhydride existieren, wobei die Polycarbonsäuren und/oder die Anhydride einzeln oder im Gemisch eingesetzt werden können mit einer Säurezahl von 20 bis 50 ist und Komponente (B) ein Aminoplastharz ist, das aus Molekülen besteht, die mindestens zwei reaktive Gruppen, bestehend aus Hydroxyl- und/oder Amino- und/oder Ethergruppen, enthalten, daß das Gewichtsverhältnis von Komponente (A) zu Komponente (B) zwischen 30 : 70 und 95 : 5 beträgt und daß die Dispersion in Wasser und/oder einem organischen Lösungsmittel oder Gemischen davon stabil und anwendbar ist.

2. Dispersion nach Anspruch 1, dadurch gekennzeichnet, daß als Komponente (B) Melaminharze eingesetzt werden.

3. Dispersion nach Ansprüchen 1 oder 2, dadurch gekennzeichnet, daß das Gewichtsverhältnis von Komponente (A) zu Komponente (B) zwischen 60 : 40 und 80 : 20 beträgt.

4. Dispersion nach Ansprüchen 1 bis 3, dadurch gekennzeichnet, daß in die Lösung der Komponente (A) in einem organischen Lösungsmittel oder Lösungsmittelgemisch die Komponente (B) gegeben, mit einer wäßrigen Lösung eines Amins zu 70 bis 90 %, vorzugsweise 80 % neutralisiert wird und das erhaltene Gemisch auf 50 bis 100 °C, vorzugsweise 70 bis 90 °C, bis zur Viskositätskonstanz erhitzt und mit dem Amin zu 100 % neutralisiert wird.

5. Dispersion nach Ansprüchen 1 bis 4, dadurch gekennzeichnet, daß das organische Lösungsmittel oder Lösungsmittelgemisch nach der vollständigen Neutralisation abdestilliert wird.

6. Verfahren zur Herstellung von wäßrigen Dispersionen von vernetzten Polymermikroteilchen in wäßrigem Medium aus einem gegebenenfalls in einem organischen Lösungsmittel gelösten, mindestens zwei Hydroxylgruppen tragenden Polymer, das über eine zur Bildung einer stabilen wäßrigen Dispersion ausreichende Anzahl ionischer Gruppen verfügt, als Komponente (A) und einer weiteren Komponente (B) bei erhöhter Temperatur, dadurch gekennzeichnet, daß Komponente (A) ein Polyesterpolyol, hergestellt aus einem oder mehreren Polyolen, ausgewählt aus Ethylenglykol, 1,2- und 1,3-Propandiol, 1,3- und 1,4-Butandiol, die isomeren Pentandiole, Hexandiole oder Octandiole (z. B. 2-Ethyl-1,3-hexandiol)trimethylolpropan), Neopentylglykol, Glycerin, Bishydroxymethylcyclohexan, Erythrit, Mesoerythrit, Arabit, Adonit, Xylit, Mannit, Sorbit, Dulcit, Hexantriol oder (poly-)Pentaerythritol und einer Polycarbonsäure mit 2 bis 18 C-Atomen oder ihren Anhydriden, soweit diese Anhydride existieren, wobei die Polycarbonsäuren und/oder die Anhydride einzeln oder im Gemisch eingesetzt werden können mit einer Säurezahl von 20 bis 50 ist und Komponente (B) ein Aminoplastharz ist, das aus Molekülen besteht, die mindestens zwei reaktive Gruppen, bestehend aus Hydroxyl- und/oder Amino- und/oder Ethergruppen, enthalten, daß das Gewichtsverhältnis von Komponente (A) zu Komponente (B) zwischen 30 : 70 und 95 : 5 beträgt und daß die Dispersion in Wasser und/oder einem organischen Lösungsmittel oder Gemischen davon stabil anwendbar ist.

7. Verfahren nach Anspruch 6, dadurch gekennzeichnet, daß als Komponente (B) Melaminharze eingesetzt werden.

8. Verfahren nach Ansprüchen 6 oder 8, dadurch gekennzeichnet, daß das Gewichtsverhältnis von Komponente (A) zu Komponente (B) zwischen 60 : 40 und 80 : 20 beträgt.

9. Verfahren nach Ansprüchen 6 bis 8, dadurch gekennzeichnet, daß in die Lösung der Komponente (A) in einem organischen Lösungsmittel oder Lösungsmittelgemisch die Komponente (B) gegeben wird, mit einer wäßrigen Lösung eines Amins zu 70 bis 90 %, vorzugsweise 80 %, neutralisiert wird, das erhaltene Gemisch auf 50 bis 100 °C, vorzugsweise 70 bis 90 °C, bis zur Viskositätskonstanz erhitzt und mit dem Amin zu 100 % neutralisiert wird.

10. Verfahren nach Ansprüchen 6 bis 9, dadurch gekennzeichnet, daß das organische Lösungsmittel oder Lösungsmittelgemisch nach der vollständigen Neutralisation abdestilliert wird.

11. Beschichtungszusammensetzung, bestehend aus einer Dispersion von vernetzten Polymermikroteilchen, hergestellt in Wasser aus einem gegebenenfalls in einem organischen Lösungsmittel gelösten, mindestens zwei Hydroxylgruppen tragenden Polymer, das über eine zur Bildung einer stabilen wäßrigen Dispersion ausreichende Anzahl ionischer Gruppen verfügt, als Komponente (A) und einer weiteren Komponente (B) bei erhöhter Temperatur, in einem Medium, das noch weiteres filmbildendes Material, Pigmente und weitere übliche Additive enthalten kann und sich insbesondere zur Herstellung von schützenden und/oder dekorativen Überzügen eignet, dadurch gekennzeichnet, daß Komponente (A) ein Polyesterpolyol, hergestellt aus einem oder mehreren Polyolen, ausgewählt aus Ethylenglykol, 1,2- und 1,3-Propandiol, 1,3- und 1,4-Butandiol, die isomeren Pentandiole, Hexandiole oder Octandiole (z. B. 2-Ethyl-1,3-hexandiol)trimethylolpropan), Neopentylglykol, Glycerin, Bishydroxymethylcyclohexan, Erythrit, Mesoerythrit, Arabit, Adonit, Xylit, Mannit, Sorbit, Dulcit, Hexantriol oder (poly-)Pentaerythritol und einer Polycarbonsäure mit 2 bis 18 C-Atomen oder ihren Anhydriden, soweit diese Anhydride existieren, wobei die Polycarbonsäuren und/oder die Anhydride einzeln oder im Gemisch eingesetzt werden können mit einer Säurezahl von 20 bis 50 ist und Komponente (B) ein Aminoplastharz ist, das aus Molekülen besteht, die mindestens zwei reaktive Gruppen, bestehend aus Hydroxyl- und/oder Amino- und/ oder Ethergruppen, enthalten und daß das Gewichtsverhältnis von Komponente (A) zur Komponente (B) zwischen 40 : 60 und 95 : 5 beträgt.

12. Beschichtungszusammensetzung nach Anspruch 11, dadurch gekennzeichnet, daß sie Metallpigmentteilchen, insbesondere Aluminiumpigmentteilchen, enthält.

13. Verwendung der Dispersionen nach einem oder mehreren der Ansprüche 1 bis 5 als Rheologiehilfsmittel und/oder Bindemittelkomponente in Beschichtungszusammensetzungen.

## Claims

1. An aqueous dispersion of cross-linked polymer microparticles, prepared in an aqueous medium from a polymer, optionally dissolved in an organic solvent, said polymer bearing at least two hydroxyl groups and comprising a number of ionic groups sufficient for the formation of a stable aqueous dispersion, as the component (A) and one further component (B) at an elevated temperature, characterized in that component (A) is a polyesterpolyol, prepared from one or more polyol(s) selected from ethylene glycol, 1,2- and 1,3-propanediol, 1,3- and 1,4-butanediol, the isomeric pentanediols, hexanediols or octanediols (e.g., 2-ethyl-1,3-hexanediol), trimethylolpropane, neopentyl glycol, glycerol, bishydroxymethyl cyclohexane, erythritol, mesoerythritol, arabitol, adonitol, xylitol, mannitol, sorbitol, dulcitol, hexanetriol or (poly-)pentaerythritol, and polycarboxylic acids or anhydrides thereof as far as these anhydrides do exist, having from 2 to 18 carbon atoms, wherein the polycarboxylic acids and/or anhydrides thereof may be employed individually or in admixtures thereof, which have an acid value of from 20 to 50, and that component (B) is an aminoplast resin consisting of molecules containing at least two reactive groups consisting of hydroxyl and/or amino and/or ether groups, that the ratio by weight of component (A) to component (B) is between 30:70 and 95:5, and that the dispersion in water and/or an organic solvent or mixtures is stable and applicable.

2. The dispersion according to claim 1, characterized in that melamine resins are employed as the component (B).

3. The dispersion according to claims 1 or 2, characterized in that the ratio by weight of component (A) to component (B) is between 60:40 and 80:20.

4. The dispersion according to claims 1 to 3, characterized in that the component (B) is added into the solution of the component (A) in an organic solvent or solvent mixture, the mixture is neutralized to a degree of from 70% to 90%, and preferably of 80%, with an aqueous solution of an amine, and the resulting mixture is heated to a temperature of from 50 °C to 100 °C, and preferably from 70 °C to 90 °C, to reach a constant viscosity, and then is neutralized up to 100% with the amine.

5. The dispersion according to claims 1 to 4, characterized in that the organic solvent or solvent mixture is distilled off after the complete neutralization.

6. A process for producing aqueous dispersions of crosslinked polymer microparticles in an aqueous medium from a polymer, optionally dissolved in an organic solvent, said polymer bearing at least two hydroxyl groups and comprising a number of ionic groups sufficient for the formation of a stable aqueous dispersion, as the component (A) and one further component (B) at an elevated temperature, characterized in that component (A) is a polyesterpolyol, prepared from one or more polyol(s) selected from ethylene glycol, 1,2- and 1,3-propanediol, 1,3- and 1,4-butanediol, the isomeric pentanediols, hexanediols or octanediols (e.g., 2-ethyl-1,3-hexanediol), trimethylolpropane, neopentyl glycol, glycerol, bishydroxymethyl cyclohexane, erythritol, mesoerythritol, arabitol, adonitol, xylitol, mannitol, sorbitol, dulcitol, hexanetriol or (poly-)pentaerythritol, and polycarboxylic acids or anhydrides thereof as far as these anhydrides do exist, having from 2 to 18 carbon atoms, wherein the polycarboxylic acids and/or anhydrides thereof may be employed individually or in admixtures thereof, which have an acid value of from 20 to 50, and that component (B) is an aminoplast resin consisting of molecules containing at least two reactive groups consisting of hydroxyl and/or amino and/or ether groups, that the ratio by weight of component (A) to component (B) is between 30:70 and 95:5, and that the dispersion in water and/or an organic solvent or mixtures is stable and applicable.

7. The process according to claim 6, characterized in that melamine resins are employed as the component (B).

8. The process according to claims 6 or 7, characterized in that the ratio by weight of component (A) to component (B) is between 60:40 and 80:20.

9. The process according to claims 6 to 8, characterized in that the component (B) is added into the solution of the component (A) in an organic solvent or solvent mixture, the mixture is neutralized to a degree of from 70% to 90%, and preferably of 80%, with an aqueous solution of an amine, and the resulting mixture is heated to a temperature of from 50 °C to 100 °C, and preferably from 70 °C to 90 °C, to reach a constant viscosity, and then is neutralized up to 100% with the amine.

10. The process according to claims 6 to 9, characterized in that the organic solvent or solvent mixture is distilled off after the complete neutralization.

11. A coating composition consisting of a dispersion of cross-linked polymer microparticles, prepared in water from a polymer, optionally dissolved in an organic solvent, said polymer bearing at least two hydroxyl groups and comprising a number of ionic groups sufficient for the formation of a stable aqueous dispersion, as the component (A) and one further component (B) at an elevated temperature, in a medium which may contain still further film-forming material, pigments and further conventional additives and is particularly suitable for producing protective and/or decorative coatings, characterized in that component (A) is a polyesterpolyol, prepared from one or more polyol(s) selected from ethylene glycol, 1,2- and 1,3-propanediol, 1,3- and 1,4-butanediol, the isomeric pentanediols, hexanediols or octanediols (e.g., 2-ethyl-1,3-hexanediol), trimethylolpropane, neopentyl glycol, glycerol, bishydroxymethyl cyclohexane, erythritol, mesoerythritol, arabitol, adonitol, xylitol, mannitol, sorbitol, dulcitol, hexanetriol or (poly-)pentaerythritol, and polycarboxylic acids or anhydrides thereof as far as these anhydrides do exist, having from 2 to 18 carbon atoms, wherein the polycarboxylic acids and/or anhydrides thereof may be employed individually or in admixtures thereof, which have an acid value of from 20 to 50, and that component (B) is an aminoplast resin consisting of molecules containing at least two reactive groups, consisting of hydroxyl and/or amino and/or ether groups, and that the ratio by weight of component (A) to component (B) is between 40:60 and 95:5.

12. The coating composition according to claim 11, characterized in that it contains metal pigment particles, and especially aluminium pigment particles.

13. Use of the dispersions according to any one or several of claims 1 through 5 as rheology aid and/or binder component in coating compositions.

## Revendications

1. Dispersion aqueuse de microparticules de polymère réticulées, préparée en milieu aqueux à partir d'un polymère éventuellement dissous dans un solvant organique, portant au moins deux groupes hydroxyle, qui dispose d'un nombre de groupes ioniques suffisant pour la formation d'une dispersion aqueuse stable, à partir du composant (A) et d'un autre composant (B) à température élevée, caractérisée en ce que le composant (A) est un polyester-polyol préparé à partir d'un ou de plusieurs polyols choisis parmi l'éthylèneglycol le 1,2- et le 1,3-propanediol, le 1,3- et le 1,4-butanediol, les isomères de pentanediol, d'hexanediol ou d'octanediol (par exemple le (2-éthyl-1,3-hexanediol), le triméthylolpropane, le néopentylglycol, la glycérine, le bishydroxyméthylcyclohexane, l'érythritol, le mésoérythritol, l'arabitol, l'adonitol, le xylitol, le mannitol, le sorbitol, le dulcitol, l'hexanetriol ou le (poly-)pentaérythritol, et d'un acide polycarboxylique ayant de 2 à 18 atomes de carbone ou de ses anhydrides, dans la mesure où ces anhydrides existent, les acides polycarboxyliques et/ou les anhydrides pouvant être utilisés isolément ou mélangés, avec un indice d'acide de 20 à 50, et le composant (B) est une résine aminoplaste qui se compose de molécules qui contiennent au moins deux groupes réactifs constitués de groupes hydroxyle et/ou amino et/ou éther, en ce que le rapport pondéral du composant (A) au composant (B) est compris entre 30:70 et 95:5 et en ce que la dispersion est stable et utilisable dans l'eau et/ou un solvant organique ou des mélanges de tels solvants.

2. Dispersion selon la revendication 1, caractérisée en ce qu'on utilise comme composant (B) des résines de mélamine.

3. Dispersion selon les revendications 1 ou 2, caractérisée en ce que le rapport pondéral du composant (A) au composant (B) est compris entre 60:40 et 80:20.

4. Dispersion selon les revendications 1 à 3, caractérisée en ce qu'on introduit le composant (B) dans une solution du composant (A) dans un solvant ou mélange de solvants organique(s), en ce qu'on neutralise avec une solution aqueuse d'une amine à 70 à 90%, de préférence 80%, et en ce qu'on chauffe le mélange obtenu à 50 à 100°C, de préférence 70 à 90°C, jusqu'à viscosité constante et en ce qu'on neutralise avec l'amine à 100%.

5. Dispersion selon les revendications 1 à 4, caractérisée en ce qu'on élimine par distillation le solvant ou mélange de solvants organique(s) après neutralisation complète.

6. Procédé de préparation de dispersions aqueuses de particules de polymère réticulées en milieu aqueux à partir d'un polymère éventuellement dissous dans un solvant organique, portant au moins deux groupes hydroxyle, qui dispose d'un nombre de groupes ioniques suffisant pour la formation d'une dispersion aqueuse stable, comme composant (A), et d'un autre composant, (B), caractérisées en ce que le composant (A) est un polyester-polyol préparé à partir d'un ou plusieurs polyols choisis parmi l'éthylèneglycol, le 1,2- et le 1,3-propanediol, le 1,3- et le 1,4-butanediol, les isomères de pentanediol, d'hexanediol ou d'octanediol (par exemple le (2-éthyl-1,3-hexanediol), le triméthylolpropane, le néopentylglycol, la glycérine, le bishydroxyméthylcyclohexane, l'érythritol, le mésoérythritol, l'arabitol, l'adonitol, le xylitol, le mannitol, le sorbitol, le dulcitol, l'hexanetriol ou le (poly-)pentaérythritol, et d'un acide polycarboxylique ayant de 2 à 18 atomes de carbone ou de ses anhydrides, dans la mesure où ces anhydrides existent, les acides polycarboxyliques et/ou les anhydrides pouvant être utilisés isolément ou mélangés, avec un indice d'acide de 20 à 50 et le composant (B) est une résine aminoplaste qui se compose de molécules qui contiennent au moins deux groupes réactifs constitués de groupes hydroxyle et/ou amino et/ou éther, en ce que le rapport pondéral du composant (A) au composant (B) est compris entre 30:70 et 95:5 et en ce que la dispersion est utilisable de façon stable dans l'eau et/ou un solvant organique ou des mélanges de tels solvants.

7. Procédé selon la revendication 6, caractérisé en ce qu'on utilise comme composant (B) des résines de mélamine.

8. Procédé selon la revendication 6 ou 7, caractérisé en ce que le rapport pondéral du composant (A) au composant (B) est compris entre 60:40 et 80:20.

9. Procédé selon les revendications 6 à 8, caractérisé en ce qu'on introduit le composant (B) dans une solution du composant (A) dans un solvant ou mélange de solvants organique(s), en ce qu'on neutralise avec une solution aqueuse d'une amine à 70 à 90%, de préférence 80%, en ce qu'on chauffe le mélange obtenu à 50 à 100°C, de préférence 70 à 90°C, jusqu'à viscosité constante, et en ce qu'on neutralise avec l'amine à 100%.

10. Procédé selon les revendications 6 à 9, caractérisé en ce qu'on élimine par distillation le solvant ou mélange de solvants organique(s) après neutralisation complète.

11. Composition de revêtement constituée d'une dispersion de microparticules de polymère réticulées, préparée dans l'eau à partir d'un polymère éventuellement dissous dans un solvant organique, portant au moins deux groupes hydroxyle, qui dispose d'un nombre suffisant de groupes ioniques pour la formation d'une dispersion aqueuse stable, comme composant (A), et d'un autre composant, (B), à température élevée, dans un milieu qui peut encore contenir une quantité supplémentaire de matière filmogène, des pigments et d'autres additifs habituels, et convient en particulier pour préparer des revêtements protecteurs et/ou décoratifs, caractérisée en ce que le composant (A) est un polyester-polyol préparé à partir d'un ou plusieurs polyols choisis parmi l'éthylèneglycol, le 1,2- et le 1,3-propanediol, le 1,3- et le 1,4-butanediol, les isomères de pentanediol, d'hexanediol ou d'octanediol (par exemple le 2-éthyl-1,3-hexanediol), le triméthylolpropane, le néopentylglycol, la glycérine, le bishydroxyméthylcyclohexane, l'érythritol, le mésoérythritol, l'arabitol, l'adonitol, le xylitol, le mannitol, le sorbitol, le dulcitol, l'hexanetriol ou le (poly-)pentaérythritol, et d'un acide polycarboxylique ayant de 2 à 18 atomes de carbone ou de ses anhydrides, dans la mesure où ces anhydrides existent, les acides polycarboxyliques et/ou les anhydrides pouvant être utilisés seuls ou mélangés, avec un indice d'acide de 20 à 50, et le composant (B) est une résine aminoplaste qui se compose de molécules qui contiennent au moins deux groupes réactifs, constitués de groupes hydroxyle et/ou amino et/ou éther, et en se que le rapport pondéral du composant (A) au composant (B) est compris entre 40:60 et 95:5.

12. Composition de revêtement selon la revendication 11, caractérisée en ce qu'elle contient des particules de pigment métalliques, en particulier des particules de pigment d'aluminium.

13. Application de la dispersion selon une ou plusieurs des revendications 1 à 5 comme adjuvent de rhéologie et/ou composant liant dans des compositions de revêtement.
